Europäisches Patentamt

European Patent Office

Office européen des brevets

(19)

(11) Numéro de publication: **0 337 040**

**A1**

(12) **DEMANDE DE BREVET EUROPEEN**

(21) Numéro de dépôt: **88400904.4**

(22) Date de dépôt: **14.04.88**

(51) Int. Cl.⁴ **F16F 15/26 , B06B 1/16 , G05D 19/02**

(43) Date de publication de la demande:
**18.10.89 Bulletin 89/42**

(84) Etats contractants désignés:
**AT BE CH DE ES FR GB IT LI LU NL SE**

(71) Demandeur: **ALSTHOM**
**38, avenue Kléber**
**F-75784 Paris Cédex 16(FR)**

(72) Inventeur: **Argouarc'h, Jean René**
**Saint Martin**
**F-44115 Haute Goulaine(FR)**
Inventeur: **Darmon, Claude Alain**
**46 rue de Turbigo**
**F-75003 Paris(FR)**
Inventeur: **Masson, André**
**17 avenue de la Réunion**
**F-93600 Aulnay Sous Bois(FR)**
Inventeur: **Legouis, Thierry**
**12 rue Jean Baptiste Robert**
**·F 44230 Saint Sébastien sur Loire(FR)**

(74) Mandataire: **Weinmiller, Jürgen et al**
**Lennéstrasse 9 Postfach 24**
**D-8133 Feldafing(DE)**

(54) **Dispositif pour compenser une force vibratoire ou un couple vibratoire créé par un corps.**

(57) Le dispositif de compensation d'une force vibratoire consiste à utiliser quatre masses tournantes (1 à 4) à axes parallèles et situées dans un même plan P. Les masses sont symétriques deux à deux par rapport à un plan perpendiculaire au plan P et passant par la ligne de force de la force vibratoire F à compenser, donc contre-rotatives.

Pour compenser un couple vibratoire, on utilise quatre masses tournantes (15 à 18) à axes (19 à 22) parallèles à un axe D et deux à deux symétriques par rapport à cet axe D, donc co-rotatives.

EP 0 337 040 A1

FIG.1

FIG. 2

## Dispositif pour compenser une force vibratoire ou un couple vibratoire créé par un corps.

La présente invention concerne un dispositif pour compenser soit une force vibratoire, soit un couple vibratoire subi par un support d'un organe mécanique susceptible d'engendrer de telles vibrations, par exemple un moteur diesel.

L'invention vise plus particulièrement un dispositif de réduction de vibrations de type inertiel synchrone particulièrement adapté à des vibrations dont les caractéristiques varient dans le temps.

La plupart des systèmes de réduction de vibrations utilisés jusqu'à présent sont des systèmes dits "passifs", en général des ressorts ou des organes en élastomères qui permettent d'isoler la structure vibrante de son support. Le pouvoir d'atténuation vibratoire de ces systèmes dépend de leur nature même et plus précisément de leurs fréquences de résonnance ainsi que de leurs amortissements.

Dans une certaine gamme de fréquences, située autour des fréquences de résonnance, ces systèmes amplifient les vibrations alors qu'ils les diminuent aux autres fréquences.

Des systèmes "actifs", à base de vérins asservis ou autres mécanismes équivalents, permettent également de filtrer les vibrations sur une plage de fréquences beaucoup plus réduite, néanmoins la complexité de tels systèmes ainsi que leur importante consommation d'énergie les rendent difficilement utilisables.

Hormis ces systèmes dont les domaines d'action sont des gammes plus ou moins importantes de fréquences, il existe différents autres systèmes dont le but est de réduire les vibrations à une fréquence unique. Le plus connu est le "résonateur accordé" dont la fréquence propre de vibration est choisie de façon à correspondre exactement à la fréquence à atténuer. Ce type de système est bien adapté lorsque la fréquence ne fluctue pas mais devient très vite inexploitable dans le cas contraire.

L'invention a ainsi pour but de proposer un système dont les caractéristiques peuvent s'adapter au cours du temps aux fluctuations en amplitude, en phase et en fréquence, de la raie que l'on souhaite atténuer.

Ainsi, l'invention a pour premier objet un dispositif pour compenser une force vibratoire F créée par un corps, caractérisé en ce qu'il comporte quatre masselottes tournantes excentrées, situées dans un même plan P contenant le centre de gravité dudit corps vibrant, chaque masselotte étant entraînée par un moteur électrique, les axes de rotation des masselottes étant parallèles, perpendiculaires au plan P et liés audit corps, les quatre masselottes comprenant une première paire de masselottes tournant en sens inverse l'une par rapport à l'autre et dont les axes de rotation sont symétriques par rapport à un plan $P_1$ contenant le centre de gravité dudit corps vibrant et perpendiculaire au plan P, et une deuxième paire de masselottes tournant en sens inverse l'une de l'autre et dont les axes de rotation sont symétriques par rapport audit plan $P_1$, les quatre masselottes tournant à la même vitesse $\omega$, les masselottes de la première paire générant chacune une force tournante $F_1$ située dans le plan P, et se décomposant en une première composante parasite, sinusoïdale, selon un axe perpendiculaire au plan $P_1$ et en une seconde composante utile, sinusoïdale sur l'axe $\Delta$ formé par l'intersection des plans P et $P_1$, confondu avec la ligne d'application de la force F, les composantes parasites des forces tournantes de ladite première paire se compensant l'une l'autre et les composantes utiles étant en phase et de même amplitude, les masselottes de la second paire générant également deux forces tournantes situées dans ledit plan P et se décomposant chacune également en une première composante parasite, sinusoïdale selon un axe perpendiculaire au plan $P_1$ et en une seconde composante utile, sinusoïdale sur ledit axe $\Delta$, les composantes parasites des forces tournantes de ladite seconde paire se compensant l'une l'autre et les composantes utiles étant en phase et de même amplitude et étant déphasées d'un angle 2 $\theta$ par rapport aux composantes utiles des forces tournantes de la première paire, au moins un accéléromètre étant sur chaque paire étant connecté à un calculateur travaillant en temps réel et réalisant à la fois le calcul des valeurs estimées de la fréquence, de l'amplitude de la phase et de la variation éventuelle de la fréquence, au moyen d'un filtre adaptatif et d'asservissement des quatre moteurs grâce à des signaux provenant de codeurs angulaires disposés sur chacun desdits moteurs.

Le calculateur délivre ainsi une tension de commande à chaque moteur de façon à compenser la force parasite en maintenant le mieux possible la symétrie entre les deux paires de masselottes.

Avantageusement, le filtre adaptatif est constitué par un filtre de Kalman.

L'invention a aussi pour objet un dispositif pour compenser un couple vibratoire créé par un corps, caractérisé en ce qu'il comprend quatre masselottes tournantes excentrées tournant à la même vitesse $\omega$, chaque masselotte étant entraînée par un moteur électrique, les axes de rotation des masselottes étant parallèles au vecteur moment du couple vibratoire à compenser et étant liés audit corps, les quatre masselottes comprenant une première paire de masselottes tournant l'une et l'autre dans le même sens dans un même plan $P_2$ et dont les axes de rotation sont symétriques par rapport à un axe D perpendiculaire au plan $P_2$, et une deuxième paire de masselottes tournant l'une et l'autre dans le même sens dans un même plan $P_3$ parallèle ou confondu avec le plan $P_2$ et dont les axes de rotation sont symétriques par rapport à l'axe D, les masselottes de la première paire générant deux forces tournantes $F_2$ situées dans le plan $P_2$ et constituant un simple couple appelé premier couple dont le vecteur moment est dirigé parallèlement à l'axe D et dont le module est sinusoïdal, les masselottes de la seconde paire générant également deux forces tournantes $F_2$ situées dans le plan $P_3$ constituant un simple couple appelé second couple dont le vecteur moment est dirigé parallèlement à l'axe ·D et dont le module est sinusoïdal, les modules des premier et second couples étant déphasés d'un angle $2\theta_1$ l'un par rapport à l'autre, au moins un accéléromètre sur chaque paire étant connecté à un calculateur travaillant en temps réel et réalisant à la fois le calcul des valeurs estimées de la fréquence, de l'amplitude de la phase et de la variation éventuelle de la fréquence au moyen d'un filtre adaptatif, et l'asservissement des quatre moteurs grâce à des signaux provenant de codeurs angulaires disposés sur chacun desdits moteurs.

Le calculateur délivre ainsi une tension de commande à chaque moteur de façon à compenser le couple parasite en maintenant le mieux possible la symétrie entre les deux paires de masselottes.

Avantageusement, le filtre adaptatif est constitué par un filtre de Kalman.

L'invention va maintenant être décrite en se reportant au dessin annexé dans lequel :

La figure 1 est une représentation schématique théorique d'un dispositif pour compenser une force vibratoire selon l'invention.

La figure 2 est une représentation schématique théorique d'un dispositif pour compenser un couple vibratoire.

La figure 3 donne un exemple de montage d'un compensateur de force.

La figure 4 donne un exemple de montage d'un compensateur de couple.

La figure 5 est un schéma simplifié montrant le dispositif de commande.

La figure 6 est un schéma similaire à celui de la figure 5 mais pour la compensation d'un couple vibratoire.

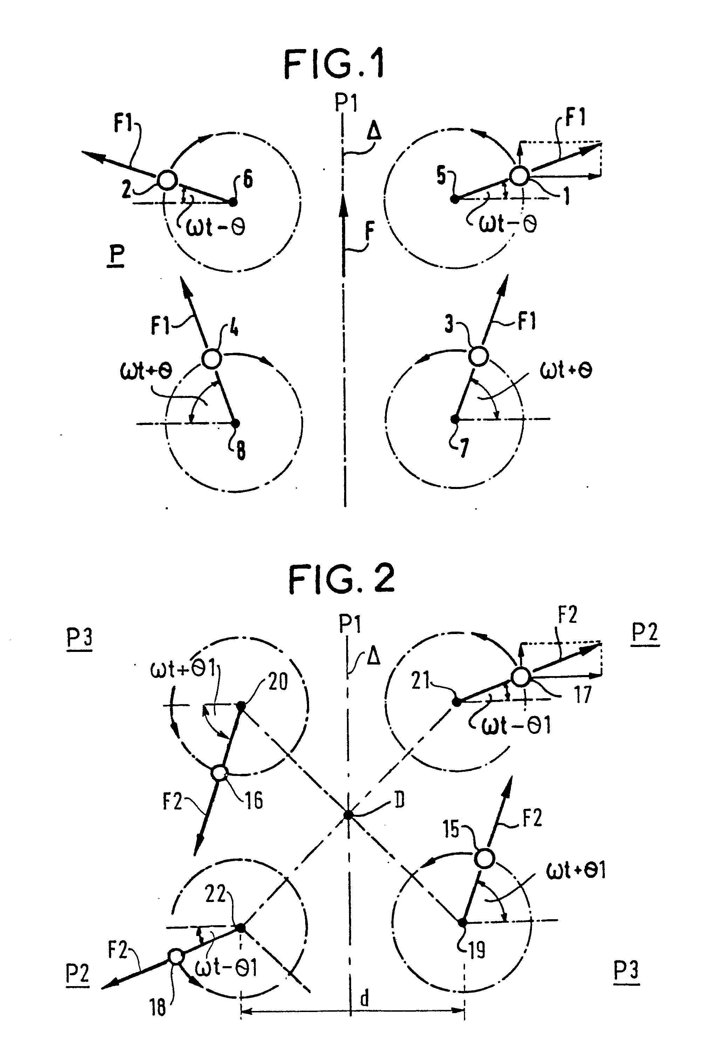

En se référant à la figure 1, soit une force vibratoire, de module F et de fréquence $\frac{\omega}{2\pi}$ située sur un axe $\Delta$, subie par un corps. Le dispositif de compensation comprend quatre masselottes es tournantes excentrées 1, 2, 3 et 4, entraînées chacune par un moteur électrique.

Les axes des masselottes sont parallèles et liés au corps soumis à vibration. Les axes de rotation 5 et 6 de la première paire de masselottes 1 et 2 sont symétriques l'un l'autre par rapport à un plan $P_1$ passant par l'axe $\Delta$ et perpendiculaire au plan P de rotation des masselottes. Les masselottes 1 et 2 de cette première paire tournent à la même vitesse $\omega$, en sens inverse l'une de l'autre symétriquement par rapport au plan $P_1$ créant ainsi deux forces tournantes égales $F_1$ dont les lignes d'action se coupent sur l'axe $\Delta$ et se décomposant en deux composantes parasites sinusoïdales se compensant l'une l'autre de valeur $F_1 \cos(\omega t - \theta)$ et $-F_1 \cos(\omega t - \theta)$ sur un axe perpendiculaire à l'axe $\Delta$ et en deux composantes utiles sinusoïdales sur l'axe $\Delta$ de même valeur : $F_1 \sin(\omega t - \theta)$ produisant ainsi une force le long de l'axe $\Delta$ d'une valeur égale à $2 F_1 \sin(\omega t - \theta)$.

De même, les axes de rotation 7 et 8 de la seconde paire de masselottes 3 et 4 sont symétriques l'un l'autre par rapport au plan $P_1$ passant par $\Delta$ et perpendiculaire au plan P. Ces masselottes 3 et 4 tournent également en sens inverse l'une de l'autre à la même vitesse $\omega$ mais déphasées d'un angle $2\theta$ par rapport aux masselottes 1 et 2 de la première paire. Ces masselottes produisent également deux forces tournantes $F_1$ se décomposant comme précédemment en deux composantes parasites perpendiculaires au plan P et se compensant l'une l'autre et en deux composantes utiles sur l'axe $\Delta$ de même valeur $F_1 \sin(\omega t - \theta)$ produisant sur l'axe $\Delta$ un effort égal à $2F_1 \sin(\omega t - \theta)$.

En définitive, le long de l'axe $\Delta$ on obtient deux forces dont l'une, donnée par la première paire de masselottes vaut $2F_1 \sin(\omega t - \theta)$ et l'autre, donnée par la seconde paire de masselottes vaut $2F_1 \sin(\omega t + \theta)$. Ces deux forces conjuguées donnent finalement une force égale à : $4 F_1 \sin\omega t \cos\theta$. On voit donc qu'on respectant la condition $F = 4F_1 \cos\theta$, c'est-à-dire encore $\cos\theta = F/4 m \omega^2 r$, où m et r sont la masse de chaque masselotte et leur excentrement, le dispositif compense exactement, à la fréquence $\omega/2\pi$ Hz, la force vibratoire parasite F.

En pratique, chaque masse peut être réalisée par une biellete ou encore par un disque homogène sur lequel on dispose un balourd. Cette pièce peut être par exemple, montée directement sur l'arbre de sortie de son moteur d'entraînement par l'intermédiaire d'un accouplement flexible.

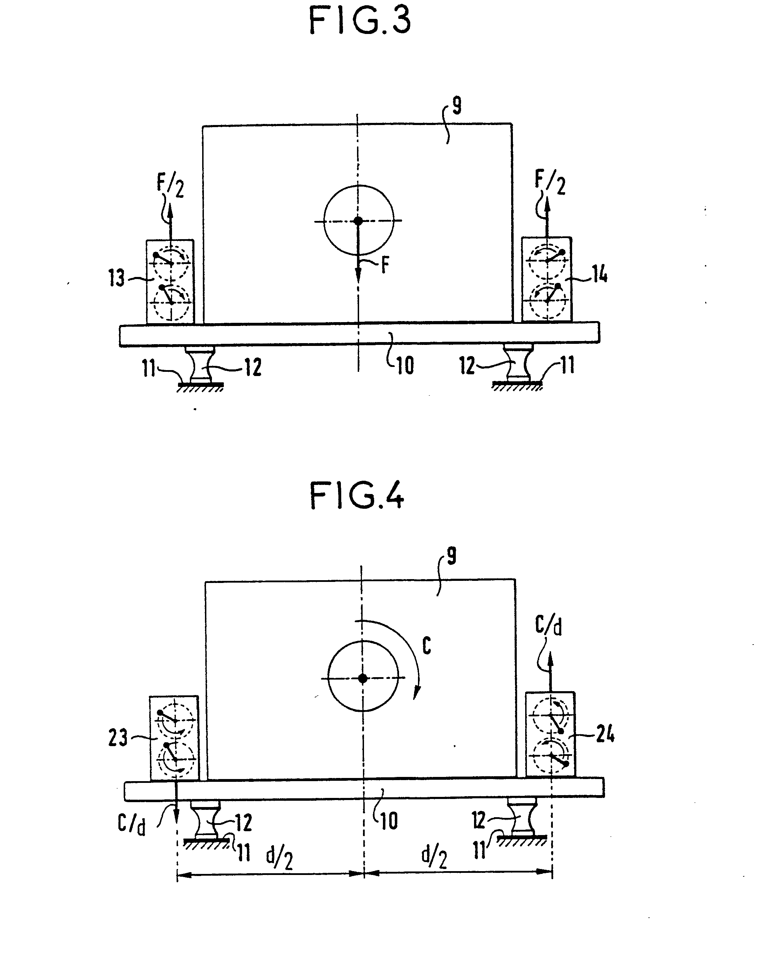

Les figures 3 et 4 montrent l'utilisation du dispositif dans le cas d'une machine 9 générant soit une force, soit un couple vibratoire et se trouvant sur un socle 10 lui même reposant sur le sol 11 par l'intermédiaire de supports 12.

Les masses 2 et 4 sont placées à l'intérieur

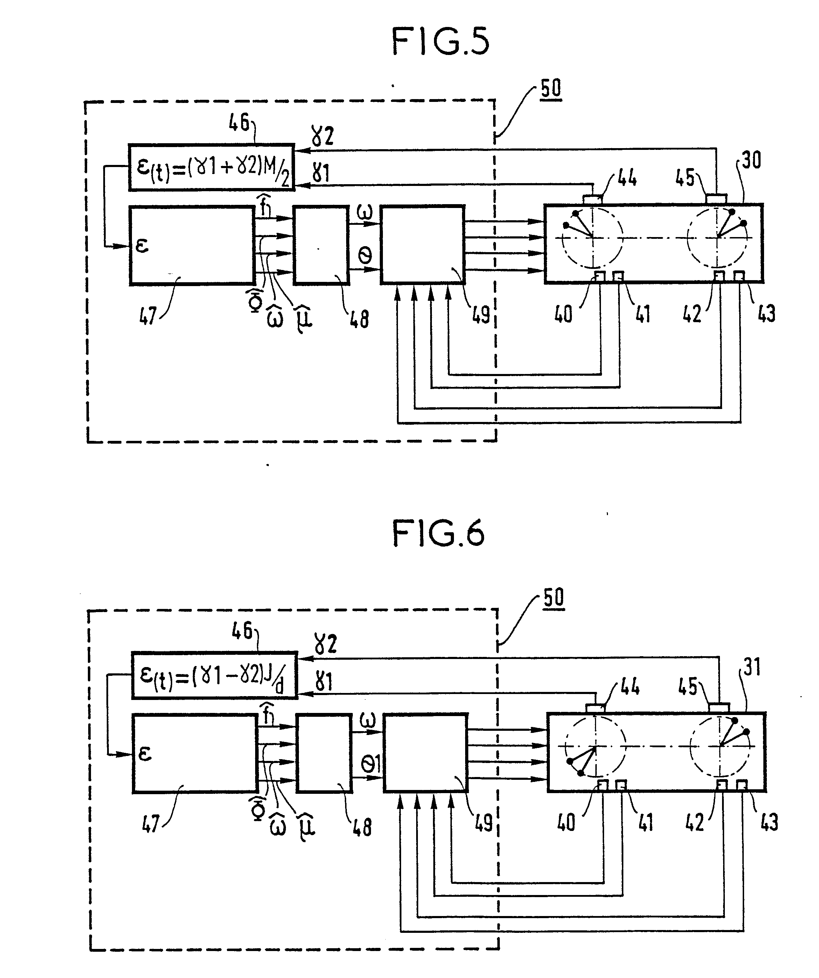

d'une boîte 13 contenant également les moteurs d'entraînement et les masses 1 et 3 sont placées à l'intérieur d'une boîte 14 contenant de même les moteurs électriques d'entraînement. Ces boîtes sont placées les moteurs électriques d'entraînement. Ces boîtes sont placées symétriquement par rapport à l'effort F à compenser. Elles sont fixées sur le socle 10 et elles contiennent chacune un accéléromètre donnant les signaux permettant, par le dispositif de commande représenté figure 5 et décrit plus loin, de commander la vitesse des moteurs tout en ajustant l'angle de déphasage $\theta$.

Sur la figure 1 on a représenté les axes 5 et 6 avec le même écartement que celui des axes 7 et 8 mais cet écartement pourrait être différent.

La figure 2 montre le schéma théorique d'un dispositif compensateur de couple de module C et de fréquence $\omega/2\pi$.

Il comporte également quatre masselottes excentrées 15, 16, 17 et 18 tournant à la même vitesse $\omega$ et étant chacune entraînée par un moteur électrique autour des axes respectifs de rotation 19, 20, 21 et 22 liés au corps soumis au couple vibratoire à compenser.

Les quatre axes 19, 20, 21, 22 étant parallèles au vecteur moment du couple à compenser.

Les masselottes 15 et 16 forment une première paire. Les masselottes de cette première paire tournent dans le même sens dans un même plan $P_2$, les axes de rotation 19 et 20 étant symétriques par rapport à un axe D perpendiculaire au plan $P_2$ et parallèle au vecteur moment du couple vibratoire à compenser.

En tournant, ces masselottes engendrent des forces centrifuges égales $F_2$ générant un simple couple appelé premier couple $C_1$ dont le vecteur moment a une direction parallèle à l'axe D et dont le module est sinusoïdal.

De la même manière, les masselottes 17 et 18 forment une seconde paire. Les masselottes de cette seconde paire tournent dans le même sens, qui est celui de la première paire, dans un même plan $P_3$ parallèle ou confondu avec le plan $P_2$. Les axes de rotation 21 et 22 sont également symétriques par rapport à l'axe D et l'écartement entre les axes 19 et 22 est égal à l'écartement entre les axes 20 et 21 noté d. De la même manière, les masselottes 17 et 18 sont telles et positionnées l'une par rapport à l'autre qu'elles génèrent deux forces centrifuges égales $F_2$ constituant un simple couple de même valeur que le couple $C_1$, appelé second couple, et dont le vecteur moment est dirigé parallèlement à l'axe D et dont le module est sinusoïdal et déphasé d'un angle $2\theta_1$ par rapport au module du vecteur moment du premier couple. Ces deux couples conjugués donnent finalement un couple égal à : $2 C_1 \sin \omega t \cos \theta_1$.

De la même façon que précédemment, on voit qu'en respectant la condition $C = 2C_1 \cos \theta_1$, c'est-à-dire $\cos \theta_1 = C/2 m \omega^2 d r$, le dispositif compense exactement, à la fréquence $\omega/2\pi$, le couple vibratoire parasite C.

En pratique, comme le montre la figure 4 les masselottes 16 et 18 sont regroupées dans une même boîtes 23 avec leur moteur d'entraînement et un accéléromètre de mesure, et les masselottes 15 et 17 sont regroupées dans une même boîte 24 avec leur moteur d'entraînement et aussi un accéléromètre de mesure. Les boîtes 23 et 24 sont placées symétriquement par rapport au plan vertical passant par l'axe de rotation du moteur 9.

Les axes des quatre masselottes pourraient aussi être tous situés dans un même plan horizontal perpendiculaire aux plans $P_2$ et $P_3$.

Les figures 5 et 6 représentent schématiquement le dispositif de commande, respectivement pour une compensation de force et pour une compensation de couple. Ces deux commandes sont identiques dans leur principe et comportent les mêmes éléments repérés par les mêmes références.

Sur la figure 5, relative à la commande pour la compensation d'une force, le système mécanique constitué par les boîtes 13 et 14 de la figure 3 est symbolisé par un rectangle 30.

Sur la figure 6, relative à la commande pour la compensation d'un couple, le système mécanique constitué par les boîtes 23 et 24 de la figure 4 est symbolisé par un rectangle 31.

Dans les deux cas, chaque moteur comporte un capteur de position angulaire 40 à 43 et chaque paire de masselottes comporte un accéléromètre 44 et 45.

Les signaux d'accélération $\gamma_1$ et $\gamma_2$ provenant des accéléromètres 44 et 45 permettent de calculer, dans un module calculateur 46 le signal résiduel $\epsilon(t) = (\gamma_1 = \gamma_2) M/2$ dans le cas d'une compensation d'une force vibratoire et $\epsilon(t) = (\gamma_1 - \gamma_2) J/d$ dans le cas d'une compensation d'un couple vibratoire. Formules dans lesquelles M représente la masse et J le moment d'inertie suivant l'axe de rotation du système vibrant.

Ce signal $\epsilon(t)$ est envoyé en entrée sur un filtre de Kalman 47 qui réalise les opérations définies par les équations suivantes :

$$\frac{d\hat{f}}{dt} = \frac{2}{t} \cos \hat{\phi}\, \varepsilon_{(t)}$$

$$\frac{d\hat{\phi}}{dt} = \hat{\omega} - \frac{18}{\hat{f}t} \sin \hat{\phi}\, \varepsilon_{(t)}$$

$$\frac{d\hat{\omega}}{dt} = \hat{\mu} - \frac{72}{\hat{f}t^2} \sin \hat{\phi}\, \varepsilon_{(t)}$$

$$\frac{d\hat{\mu}}{dt} = - \frac{120}{\hat{f}t^3} \sin \hat{\phi}\, \varepsilon_{(t)}$$

dans lesquelles

$\hat{f}$ est l'estimée de l'amplitude de la raie à compenser

$\hat{\phi}$ est l'estimée de la phase de la raie à compenser

$\hat{\omega}/2\pi$ est l'estimée de la fréquence de la raie à compenser

$\hat{\mu}$ est l'estimée de la dérivée par rapport au temps de la fréquence de la raie à compenser.

A la sortie du filtre de Kalman, on obtient ainsi ces variables $\hat{f}$, $\hat{\phi}$, $\hat{\omega}$, $\hat{\mu}$ qui sont ensuite envoyées dans un bloc de calcul 48 afin d'en déduire la valeur du demi-déphasage $\theta$ (ou $\theta_1$) nécessaire pour générer une force (ou un couple) d'amplitude égale à $\hat{f}$.

Dans le cas d'une force, on a :

$\theta = \cos^{-1} (\hat{f}/4\, m\, r\, \hat{\omega}^2)$

Dans le cas d'un couple on a :

$\theta_1 = \cos^{-1} (\hat{f}/2\, m\, r\, d\, \hat{\omega}^2)$

Enfin, on dispose d'une boucle d'asservissement 49 dont le rôle est de générer quatre consignes de vitesse aux moteurs électriques (une par moteur) telles que la vitesse moyenne de rotation des quatre masselottes soit bien $\omega$ (aux réglages du déphasage près) et qui assurent les déphasages adéquats entre les diverses masselottes.

Sur les figures 5 et 6, on a repéré par un cadre 50 l'ensemble des organes 46 à 49 constituant le calculateur travaillant en temps réel.

## Revendications

1/ Dispositif pour compenser une force vibratoire F créée par un corps (9, 10), caractérisé en ce qu'il comporte quatre masselottes (1 à 4) tournantes, excentrées, situées dans un même plan P contenant le centre de gravité dudit corps vibrant, chaque masselotte étant entraînée par un moteur électrique, les axes de rotation (5 à 8) des masselottes étant parallèles, perpendiculaires au plan P et liés audit corps, les quatre masselottes comprenant une première paire de masselottes (1, 2) tournant en sens inverse l'une par rapport à l'autre et dont les axes de rotation sont symétriques par rapport à un plan $P_1$ contenant le centre de gravité dudit corps vibrant et perpendiculaire au plan P, et une deuxième paire de masselottes (3, 4) tournant en sens inverse l'une par rapport à l'autre et dont les axes de rotation sont symétriques par rapport audit plan $P_1$, les quatre masselottes tournant à la même vitesse $\omega$, les masselottes de la première paire générant chacune une force tournante $F_1$ située dans le plan P, et se décomposant en une première composante parasite, sinusoïdale, selon un axe perpendiculaire au plan $P_1$ et en une seconde composante utile, sinusoïdale sur l'axe $\Delta$ formé par l'intersection des plans P et $P_1$, confondu avec la ligne d'application de la force F, les composantes parasites des forces tournantes de ladite première paire se compensant l'une l'autre et les composantes utiles étant en phase et de même amplitude, les masselottes de la seconde paire générant également deux forces tournantes situées dans ledit plan P et se décomposant chacune également en une première composante parasite, sinusoïdale selon un axe perpendiculaire au plan $P_1$ et en une seconde composante utile, sinusoïdale sur ledit axe $\Delta$, les composantes parasites des forces tournantes de ladite seconde paire se compensant l'une l'autre et les composantes utiles étant en phase et de même amplitude et étant déphasées d'un angle $2\theta$ par rapport aux composantes utiles des forces tournantes de la première paire, au moins un accéléromètre (44, 45) sur chaque paire étant connecté à un calculateur (50) travaillant en temps réel et réalisant à la fois le calcul des valeurs estimées de la fréquence, de l'amplitude, de la phase et de la variation éventuelle de la fréquence au moyen d'un filtre adaptatif (48), et l'asservissement (49) des quatre moteurs grâce à des signaux provenant de codeurs angulaires (40 à 43) disposés sur chacun desdits moteurs.

2/ Dispositif selon la revendication 1, caractérisé en ce que ledit filtre adaptatif (48) est un filtre de Kalman.

3/ Dispositif pour compenser un couple vibratoire créé par un corps (9, 10), caractérisé en ce qu'il comprend quatre masselottes tournantes excentrées (15 à 18) tournant à la même vitesse $\omega$, chaque masselotte étant entraînée par un moteur électrique, les axes (19 à 22) de rotation des masselottes étant parallèles au vecteur moment du couple vibratoire à compenser et étant liés audit corps, les quatre masselottes comprenant une première paire de masselottes (15, 16) tournant l'une et l'autre dans le même sens dans un même plan $P_2$ et dont les axes de rotation sont symétriques par rapport à un axe D perpendiculaire au plan $P_2$, et une deuxième paire de masselottes (17, 18) tournant l'une et l'autre dans le même sens dans un même plan $P_3$ parallèle ou confondu avec le

plan $P_2$ et dont les axes de rotation sont symétriques par rapport à l'axe D, les masselottes de la première paire générant deux forces tournantes $F_2$ situées dans le plan $P_2$, constituant un simple couple appelé premier couple dont le vecteur moment est dirigé parallèlement à l'axe D et dont le module est sinusoïdal, les masselottes de la seconde paire générant également deux forces tournantes $F_2$ situées dans le plan $P_3$ constituant un simple couple appelé second couple dont le vecteur moment est dirigé parallèlement à l'axe D et dont le module est sinusoïdal, les modules des premier et second couples étant déphasés d'un angle $2\theta_1$ l'un par rapport à l'autre, au moins un accéléromètre (44, 45) sur chaque paire étant connecté à un calculateur (50) travaillant en temps réel et réalisant à la fois le calcul des valeurs estimées de la fréquence, de l'amplitude, de la phase et de la variation éventuelle de la fréquence au moyen d'un filtre adaptatif (48), et l'asservissement (49) des quatre moteurs grâce à des signaux provenant de codeurs angulaires (40 à 43) disposés sur chacun desdits moteurs.

4/ Dispositif selon la revendication 3, caractérisé en ce que ledit filtre adaptatif (48) est un filtre de Kalman.

# FIG.1

# FIG.2

# FIG.3

# FIG.4

## FIG.5

$$\varepsilon_{(t)} = (\gamma 1 + \gamma 2) M/2$$

## FIG.6

$$\varepsilon_{(t)} = (\gamma 1 - \gamma 2) J/d$$

# RAPPORT DE RECHERCHE EUROPEENNE

Office européen
des brevets

Numero de la demande

EP 88 40 0904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 7, no. 215 (M-244)[1360], 22 septembre 1983; & JP-A-58 109 744 (TOYOTA JIDOSHA KOGYO K.K.) 30-06-1983 --- | 1-4 | F 16 F 15/26 B 06 B 1/16 G 05 D 19/02 |
| A | PATENT ABSTRACTS OF JAPAN, vol. 7, no. 79 (M-204)[1224], 31 mars 1983; & JP-A-58 4689 (NISHISHIBA DENKI K.K.) 11-01-1983 --- | 1-4 | |
| A | FR-A- 856 143 (COMPAGNIA NAZIONALE AERONAUTICA) * Page 1, colonne de droite, ligne 51 - page 2, colonne de gauche, ligne 1; page 2, colonne de gauche, lignes 33-40; figures * --- | 1,3 | |
| A | EP-A-0 092 014 (LOSENHAUSEN) * Résumé; figure 1 * --- | 1,3 | |
| A | TRANSACTIONS A.S.M.E., SERIE B: JOURNAL OF ENGINEERING FOR INDUSTRY, vol. 95, no. 2, mai 1973, pages 650-656; E.N. STEVENSEN Jr.: "Balancing of machines" * Page 650, colonne de droite, ligne 32 - page 651, colonne de gauche, ligne 11 * --- | 1 | DOMAINES TECHNIQUES RECHERCHES (Int. Cl.4) F 16 F B 06 B G 05 D |
| A | DE-C-3 709 112 (KNAUER) * Figures 1,2; résumé * --- | 1,3 | |
| E | FR-A-2 606 110 (ALSTHOM) * En entier * ----- | 1-4 | |

Le présent rapport a été établi pour toutes les revendications

| Lieu de la recherche | Date d'achèvement de la recherche | Examinateur |
|---|---|---|
| LA HAYE | 12-12-1988 | TORSIUS A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................
& : membre de la même famille, document correspondant

EPO FORM 1503 03.82 (P0402)